# EUROPÄISCHE PATENTSCHRIFT

(11) **EP 2 394 247 B1**
(45) Veröffentlichungstag und Bekanntmachung des Hinweises auf die Patenterteilung: **25.01.2017**
(21) Anmeldenummer: 10713796.0
(22) Anmeldetag: 28.01.2010
(51) Int. Cl.: G06T 7/00, B60W 30/16

(54) **VERFAHREN UND VORRICHTUNG ZUM BETRIEB EINES VIDEOBASIERTEN FAHRERASSISTENZSYSTEMS IN EINEM FAHRZEUG**
METHOD AND APPARATUS FOR OPERATING A VIDEO-BASED DRIVER ASSISTANCE SYSTEM IN A VEHICLE
PROCÉDÉ ET DISPOSITIF DE MISE EN OEUVRE D'UN SYSTÈME D'AIDE À LA CONDUITE PAR VIDÉO DANS UN VÉHICULE

(30) Priorität: 06.02.2009 DE 102009007842
(43) Veröffentlichungstag der Anmeldung: 14.12.2011
(73) Patentinhaber: Automotive Distance Control Systems GmbH, 88131 Lindau/Bodensee (DE)
(72) Erfinder: WALTER, Michael, 9435 Widnau (CH)
(74) Vertreter: Bobbert, Christiana
(86) Internationale Anmeldenummer: PCT/DE2010/000086
(87) Internationale Veröffentlichungsnummer: WO 2010/088877

(56) Entgegenhaltungen:
- EP-A2- 0 436 213
- WO-A1-2004/072901
- ERNST S ET AL: "Camera calibration for lane and obstacle detection" INTELLIGENT TRANSPORTATION SYSTEMS, 1999. PROCEEDINGS. 1999 IEEE/IEEJ/ JSAI INTERNATIONAL CONFERENCE ON TOKYO, JAPAN 5-8 OCT. 1999, PISCATAWAY, NJ, USA,IEEE, US LNKD- DOI:10.1109/ITSC.1999.821081, 5. Oktober 1999 (1999-10-05), Seiten 356-361, XP010369932 ISBN: 978-0-7803-4975-9

## Beschreibung

Die Erfindung betrifft ein Verfahren zum Betrieb eines videobasierten Fahrerassistenzsystems in einem Fahrzeug gemäß den Merkmalen des Oberbegriffs des Anspruchs 1. Die Erfindung betrifft weiterhin eine Vorrichtung zum Betrieb eines videobasierten Fahrerassistenzsystems in einem Fahrzeug gemäß den Merkmalen des Oberbegriffs des Anspruchs 4.

Aus dem Stand der Technik ist es bekannt, dass Fahrerassistenzsysteme eines Fahrzeugs in Abhängigkeit von Daten verschiedenartiger Sensoren betrieben werden. Dabei kann es sich beispielsweise um videobasierte Fahrerassistenzsysteme handeln, deren Steuerung anhand von Bilddaten erfolgt.

Zur Ermittlung derartiger Bilddaten sowie zur Identifizierung von Objekten und ihrer dreidimensionalen Lagebestimmung werden Objektmodelle verwendet. Bei der Anpassung eines Objektmodells an eine 3D-Punktwolke kommt es bei bekannten Verfahren (Schmidt, J., Wöhler, C, Krüger, L, Gövert, T., Hermes, C, 2007. 3D Scene Segmentation and Object Tracking in Multiocular Image Sequences. Proc. Int. Conf. on Computer Vision Systems (ICVS), Bielefeld, Germany.) oftmals zu Mehrdeutigkeiten (falsch positive Zuordnungen). Das Objekt wird in der Punktwolke mehrfach gefunden, obwohl es nicht so oft bzw. gar nicht vorhanden ist. Ein weiteres Problem, welches sich auf die Modellanpassung bezieht, ist die Ungenauigkeit der Anpassung. Derzeit übliche Stereoverfahren basieren meist auf der Suche von Merkmalen (Kanten, Punkte, Ecken, Pixelblöcke, usw.) in einem linken und einem rechten Bild und der anschließenden Zuordnung gleicher/ähnlicher Merkmale zueinander. Alternativ werden oftmals auch die Inhalte lokaler Bildfenster hinsichtlich ihrer Ähnlichkeit untersucht. Der so genannte Disparitätswert wird dann ermittelt, indem man den Versatz der zugeordneten Merkmale oder Bildfenster im linken und im rechten Bild zueinander bestimmt. Unter der Voraussetzung eines kalibrierten Kamerasystems kann durch Triangulation anschließend aus dem Disparitätswert dem zugehörigen Bildpunkt ein Tiefenwert zugeordnet werden. In manchen Fällen kommt es zu falschen Tiefenwerten aufgrund fehlerhafter Zuordnung. Dies geschieht häufig bei sich wiederholenden Strukturen im Bild, wie z. B. Finger der Hand, Wald, etc. bei kantenbasierten Stereoverfahren. Die aus der Fehlzuordnung entstehenden 3D-Punkte bezeichnet man als Fehlkorrespondenzen bzw. Ausreißer. Abhängig von der Wahl von Merkmalen tritt dieser Effekt mehr oder wenig häufig auf, ist aber ohne weitere Annahmen grundsätzlich nie auszuschließen. Diese Fehlkorrespondenzen beeinflussen die Anpassung des Objektmodells negativ, da sie zu einer Verschlechterung der Repräsentation der Szene durch die 3D-Punktwolke führen.

In der Literatur sind verschiedene Verfahren bekannt, die sich mit dem Problem der Fehlkorrespondenzen beschäftigen. Ein Großteil der Methoden versucht, die Ausreißer zu erkennen, um sie anschließend zu eliminieren. Nachteil hierbei ist die geringer werdende Anzahl an 3D-Punkten bzw. der dadurch verursachte Verlust an Information. Andere Verfahren [Hirschmüller, H., 2005. Accurate and Efficient Stereo Processing by Semi-Global Matching and Mutual Information, Proc. IEEE Conf. on Computer Vision and Pattern Recognition, San Diego, USA.] wiederum versuchen, beispielsweise durch Annahme von abschnittsweise glatten Oberflächen das Problem zu unterdrücken. Durch solche Glattheitsannahmen werden feine Strukturen nicht mehr erkennbar, was zu einem Informationsverlust führt. Außerdem liefern diese Verfahren nur dort gute Ergebnisse, wo wirklich mit glatten Oberflächen zurechnen ist.

S. Ernst et al.: "Camera calibration for lane and obstacle detection" Intelligent Transportation Systems 1999, Tokyo, Proceedings S.356-361 zeigen eine Kalibrierung für eine Stereokamera zur Bestimmung von Parametern, die die Beziehung zwischen 3D-Umgebung und 2D-Bildern beschreiben. Die Lage der Kameras kann durch Aufnahme eines Kalibrierungsfeldes, das auf einem Straßenabschnitt aufgezeichnet ist, durch Auswertung der davon aufgenommenen Bilddaten bestimmt werden.

WO 2004/072901 A1 zeigt ein Verfahren zur Echtzeiterkennung von Hindernissen mit einer kalibrierten Kamera und bekannter Eigenbewegung. Fahrzeugsensoren liefern Informationen über die Bewegung des Fahrzeugs (z.B. Geschwindigkeit und Winkelgeschwindigkeit). Da die Kameraeinbaulage im Fahrzeug bekannt ist, kann aus den Informationen über die Bewegung des Fahrzeugs die Eigenbewegung der Kamera bestimmt werden. Aus der Kenntnis der Kamerabewegung in Bezug auf die ebene Fahrbahn kann die Bewegung eines jede realen Punkts auf der Fahrbahnebene projiziert werden als sogenannter "echter Bewegungsfluss" (true motion flow). Aus den Kamerabildern wird ein "Bildbewegungsfluss" desselben (Bild-)Punktes berechnet (image motion flow). Durch Vergleich dieser beiden Flüsse können Hindernisse erkannt werden.

EP 0 436 213 A2 zeigt einen Hindernis-Feststellsystem, das Inertial-Sensorinformation mit optischen Fluss - und Bild-Kennzeichnungskomponenten integriert, um Hindernisse festzustellen und einen sicheren Weg für die Navigation vorzugeben. Die Art der Information des inertialen Navigationssensors, die in dem Hindernis-Feststellsystem verwendet wird, umfasst die tatsächliche Ausrichtung (Gierwinkel), den Neigungswinkel, den Rollwinkel, die inertiale Vertikalgeschwindigkeit, die Nord-Süd-Geschwindigkeit, und die Ost-West-Geschwindigkeit, welche in dem optischen Fließkomponentensystem und in dem Bildcharakterisier-Komponentensystem verwendet werden.

Der Erfindung liegt die Aufgabe zugrunde, ein verbessertes Verfahren und eine verbesserte Vorrichtung zum Betrieb eines videobasierten Fahrerassistenzsystems in einem Fahrzeug anzugeben.

Die Aufgabe wird erfindungsgemäß gelöst durch ein Verfahren mit den Merkmalen des Anspruchs 1 und eine Vorrichtung mit den Merkmalen des Anspruchs 4.

Vorteilhafte Weiterbildungen der Erfindung sind Gegenstand der Unteransprüche.

Bei dem erfindungsgemäßen Verfahren zum Betrieb eines videobasierten Fahrerassistenzsystems in einem Fahrzeug werden mittels von einer Bildaufnahmeeinheit aufgenommenen und einer Bildverarbeitungseinheit verarbeiteten Bilddaten eine Fahrzeugumgebung und/oder mindestens ein Objekt in der Fahrzeugumgebung und/oder Zustandsdaten ermittelt. Erfindungsgemäß wird bei der Ermittlung der Fahrzeugumgebung, des Objekts in der Fahrzeugumgebung und/oder der Zustandsdaten ein in den Bilddaten von aufeinander folgenden Bildern enthaltener Pixelversatz ermittelt und kompensiert. Daraus ergibt sich in vorteilhafter Weise, dass eine sehr genaue Ermittlung und daraus folgend auch Darstellung der Fahrzeugumgebung und/oder des mindestens einen Objekts in der Fahrzeugumgebung und/oder der Zustandsdaten möglich ist. Bei den Zustandsdaten handelt es sich beispielsweise um Abstände des Fahrzeugs zu stehenden oder sich bewegenden Objekten, Geschwindigkeiten und/oder Beschleunigungen dieser Objekte. Aus der genauen Ermittlung resultiert wiederum eine optimierte Steuerung des Fahrerassistenzsystems und somit eine Erhöhung der Sicherheit von Fahrzeuginsassen und anderer Verkehrsteilnehmer.

Erfindungsgemäß wird ein aus einer Nickwinkel-, Gierwinkel- und/oder Rollwinkeländerung resultierender Pixelversatz ermittelt, so dass eine Nick-, Gier- und/oder Rollbewegung keinen negativen Einfluss auf Ermittlung der Fahrzeugumgebung, des Objekts in der Fahrzeugumgebung und/oder der Zustandsdaten haben bzw. bei Kenntnis Nickwinkel-, Gierwinkel- und/oder Rollwinkeländerung der Einfluss kompensiert werden kann.

Dabei wird aus der Nickwinkel-, Gierwinkel- und/oder Rollwinkeländerung vorzugsweise eine Lageänderung mindestens eines Pixels in den aufeinander folgenden Bildern ermittelt, wobei anhand der ermittelten Lageänderung des oder der Pixel ein zu erwartender Pixelversatz bestimmt wird. Dabei ist es in vorteilhafter nicht erforderlich, für jeden Pixel des Bildes eine Lageänderung zu bestimmen, so dass eine hohe Verarbeitungsgeschwindigkeit und daraus folgend Dynamik bei der Ermittlung und Darstellung der Fahrzeugumgebung, des Objekts in der Fahrzeugumgebung und/oder der Zustandsdaten erzielbar sind.

Die Nickwinkel-, Gierwinkel- und/oder Rollwinkeländerung werden aus erfassten Drehraten während der Aufnahme zweier aufeinander folgender Bilder ermittelt. Zur Ermittlung der Drehrate wird insbesondere eine Rotationsgeschwindigkeit eines Körpers entlang einer Drehachse verstanden. Zur Bestimmung der Drehraten wird die Rotationsgeschwindigkeit des Fahrzeugs bzw. der Bildaufnahmeeinheit um eine Quer-, Hoch- und/oder Längsachse derselben ermittelt. Durch eine Integration der erfassten Rotationsgeschwindigkeit sind der Nickwinkel, Gierwinkel und/oder Rollwinkel, in welchem sich das Fahrzeug bzw. die Bildaufnahmeeinheit um die Quer-, Hoch- und/oder Längsachse innerhalb einer bestimmten Zeit gedreht hat, ermittelbar. Die bestimmte Zeit ist dabei die Zeit, welche zur Aufnahme zweier aufeinander folgender Bilder erforderlich ist. Da sich die Drehraten sehr präzise ermitteln lassen, sind in einfacher Weise sehr genaue Ergebnisse bei der Ermittlung der Nickwinkel-, Gierwinkel- und/oder Rollwinkeländerung des Fahrzeugs erzielbar.

Zur Bestimmung der Drehraten ist mindestens ein Drehratensensor vorgesehen, mittels welchem die Drehraten während der Aufnahme mindestens zweier aufeinander folgender Bilder bestimmt werden. Aus diesen während mindestens zweier aufeinander folgender Bilder ermittelten Drehraten ist mit geringem Aufwand bei gleichzeitig hoher Genauigkeit der Pixelversatz ermittelbar.

Alternativ oder zusätzlich werden mittels zumindest eines Beschleunigungssensors eine Längsbeschleunigung und/oder Querbeschleunigung des Fahrzeugs während mindestens zweier aufeinander folgender Bilder bestimmt und aus der erfassten Längsbeschleunigung und/oder Querbeschleunigung anhand eines Fahrzeugmodells die Drehraten des Fahrzeugs ermittelt. Aufgrund der redundanten Ermittlung der Drehraten mittels der Beschleunigungssensoren und des zumindest einen Drehratensensors ist das Verfahren sehr robust gegen Störgrößen und somit sehr zuverlässig.

Gemäß einer vorteilhaften Ausgestaltung des erfindungsgemäßen Verfahrens wird eine Abweichung der ermittelten Drehraten von einem Sollwert im Fall, dass das Fahrzeug sich gerade bewegt, mittels einer Filterung bestimmt. Bei dieser Filterung handelt es sich beispielsweise um eine Tiefpassfilterung, wobei durch die Filterung der Abweichung, welche beispielsweise aufgrund von Temperaturschwankungen während der Fahrt des Fahrzeugs entstehen, Messfehler minimiert werden und somit die Genauigkeit der Messung erhöht wird.

Die erfindungsgemäße Vorrichtung zum Betrieb eines videobasierten Fahrerassistenzsystems in einem Fahrzeug umfasst eine Bildaufnahmeeinheit zur Aufnahme von Bilddaten, eine Bildverarbeitungseinheit zur Verarbeitung der Bilddaten und eine Steuereinheit zur Ermittlung einer Fahrzeugumgebung und/oder mindestens eines Objekts in der Fahrzeugumgebung und/oder Zustandsdaten aus den Bilddaten. Erfindungsgemäß ist die Steuereinheit derart mit zumindest einem Drehratensensor und/oder zumindest einem Beschleunigungssensor gekoppelt, dass bei der Ermittlung der Fahrzeugumgebung, des Objekts in der Fahrzeugumgebung und/oder der Zustandsdaten ein in den Bilddaten von aufeinander folgenden Bildern enthaltener Pixelversatz anhand von erfassten Drehraten ermittelbar und kompensierbar ist.

Der zumindest eine Drehratensensor und/oder der zumindest eine Beschleunigungssensor sind unmittelbar an oder in der Bildaufnahmeeinheit angeordnet, so dass keine Umrechnung der erfassten Drehraten auf eine Position der Bildaufnahmeeinheit erforderlich ist.

Weiterhin ist der Drehratensensor ein Sensor mit dreidimensionalem Erfassungsbereich, mittels welchem gleichzeitig ein Nickwinkel, Gierwinkel und Rollwinkel des Fahrzeugs erfassbar sind, so dass in vorteilhafter Weise nur ein Sensor zur Ermittlung der Drehraten des Fahrzeugs erforderlich ist. Daraus resultiert ein verringerter Material- und Verschaltungsaufwand sowie ein daraus abgeleiteter Kostenvorteil.

In einer besonders vorteilhaften Ausgestaltung der erfindungsgemäßen Vorrichtung sind zwei Beschleunigungssensoren rechtwinklig zueinander unmittelbar an oder in der Bildaufnahmeeinheit angeordnet, wobei mittels eines Beschleunigungssensors eine Längsbeschleunigung und mittels des anderen Beschleunigungssensors eine Querbeschleunigung des Fahrzeugs erfassbar sind. Aus der Längs- und Querbeschleunigung sind in einfacher Art und Weise die Drehraten des Fahrzeugs, insbesondere unter Verwendung eines in einer Speichereinheit hinterlegten Fahrzeugmodells, ermittelbar, wobei die Verwendung der Beschleunigungssensoren zur Ermittlung der Drehraten zu einer hohen Robustheit der Vorrichtung führt.

Bei einer Verwendung der Beschleunigungssensoren zusätzlich zu dem Drehratensensor oder den Drehratensensoren wird aufgrund einer Redundanz der Erfassungseinheiten, d. h. der Beschleunigungssensoren und des Drehratensensors oder der Drehratensensoren, eine hohe Zuverlässigkeit der Vorrichtung erzielt.

Ausführungsbeispiele der Erfindung werden im Folgenden anhand von Zeichnungen näher erläutert.

Dabei zeigen:
- Fig. 1: schematisch ein Fahrzeug mit einer Vorrichtung zur Steuerung eines videobasierten Fahrerassistenzsystems und ein vor dem Fahrzeug befindliches Objekt,
- Fig. 2: schematisch ein Blockschaltbild der Vorrichtung gemäß Figur 1 und des Fahrerassistenzsystems.

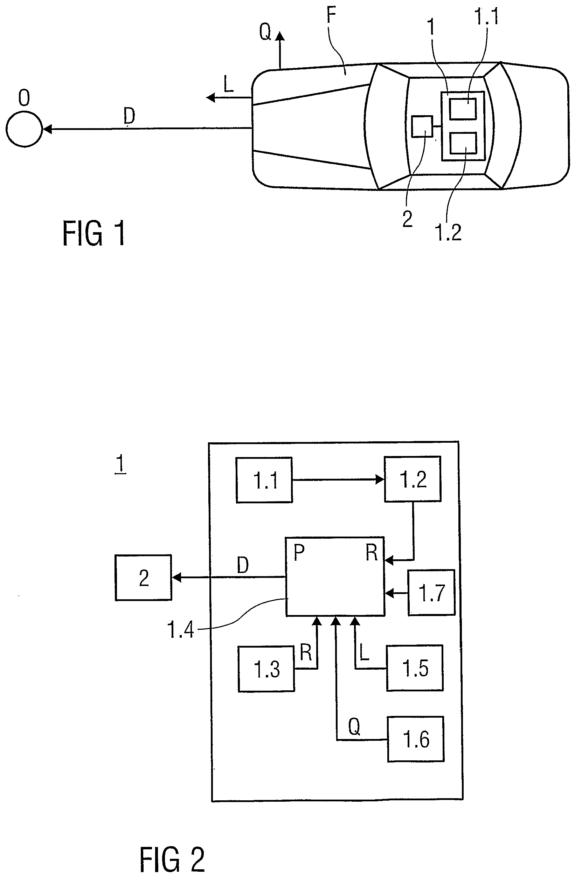

In Figur 1 sind ein Fahrzeug F mit einer Vorrichtung 1 zur Steuerung eines videobasierten Fahrerassistenzsystems 2 und ein vor dem Fahrzeug befindliches Objekt O dargestellt. Das Objekt O ist beispielsweise ein weiteres Fahrzeug, ein Fußgänger, ein Tier oder ein anderes Objekt, welches sich bewegt oder steht.

Das Fahrerassistenzsystem 2 kann ein oder mehrere Systeme umfassen, welche vor oder während kritischer Fahrsituationen in einen Antrieb, eine Steuerung oder Signaleinrichtungen des Fahrzeugs F eingreifen oder einen Fahrer des Fahrzeugs F anhand geeigneter Mittel vor den kritischen Fahrsituationen warnen.

Bei einem Teil derartiger Systeme, wie z. B. einem Abstandswarner oder einem automatischen Abstandsregeltempomat, wird ein Abstand D zwischen dem Fahrzeug F und dem Objekt O ermittelt und das Fahrerassistenzsystem 2 wird anhand des ermittelten Abstands D gesteuert.

Zur Ermittlung des Abstands D weist die Vorrichtung 1 eine Bildaufnahmeeinheit 1.1 und eine Bildverarbeitungseinheit 1.2 auf, wobei mittels von der Bildaufnahmeeinheit 1.1 aufgenommenen und der Bildverarbeitungseinheit 1.2 verarbeiteten Bilddaten eine Fahrzeugumgebung, mindestens das eine Objekt O in der Fahrzeugumgebung und/oder Zustandsdaten, ermittelt werden.

Im dargestellten Ausführungsbeispiel werden die Bilddaten, d. h. das Objekt O in der Fahrzeugumgebung, mittels der Bildaufnahmeeinheit 1.1 erfasst.

Die Vorrichtung 1 ist insbesondere als ein so genanntes stereoskopisches Bilderfassungssystem ausgebildet, bei welchem die Bildaufnahmeeinheit 1.1 zwei nicht näher dargestellte Kameras umfasst, welche vorzugsweise horizontal nebeneinander angeordnet sind und die Fahrzeugumgebung und das in dieser befindlicher Objekt O stereoskopisch erfassen.

Bei der Verarbeitung der zwei erfassten Bilder mittels der Bildverarbeitungseinheit 1.2 werden anhand zumindest eines der zahlreichen aus dem Stand der Technik bekannten Stereoalgorithmen Koordinaten zumindest eines Pixels des einen Bildes mit Koordinaten eines als potentiell korrespondierend betrachteten weiteren Pixels des anderen Bildes verglichen. Aus einem Abstand der Pixel zueinander, einer so genannten Disparität, und einem bekannten Abstand der horizontal nebeneinander angeordneten Kameras, der so genannten Basisbreite, wird der Abstand D eines Objekts O, zu welchem die erfassten Pixel gehören, zu den Kameras bestimmt.

Nach diesem Algorithmus werden vorzugsweise Disparitäten für alle Pixel der Bilder erzeugt und ein Disparitätsbild bzw. eine Disparitätskarte erzeugt, welche eine dreidimensionale Repräsentation des Objekts O in seinem Kontext darstellt. Auf diese Weise kann die Entfernung und räumliche Lage des Objekts O im Verhältnis zu den Kameras erfasst und somit der Abstand D zu dem Objekt O ermittelt werden.

Während einer Fahrt des Fahrzeugs F kann es beispielsweise aufgrund von Unebenheiten in einer Fahrbahnoberfläche, Querbeschleunigungen Q und/oder Längsbeschleunigungen L des Fahrzeugs F zu Nick-, Roll- und/oder Gierbewegungen des Fahrzeugs F kommen.

Unter der Nickbewegung wird dabei eine Wankbewegung des Fahrzeugs F um seine Querachse und unter der Rollbewegung ein Wanken um seine Längsachse des Fahrzeugs F verstanden. Die Gierbewegung ist durch eine Bewegung des Fahrzeugs F um seine Hochachse gekennzeichnet, wobei die Quer-, Längs- und Hochachse gemeinsam durch einen Schwerpunkt des Fahrzeugs F verlaufen.

Durch aufgrund der Nick-, Roll- und/oder Gierbewegungen hervorgerufene Nick-, Roll- und/oder Gierwinkeländerungen des Fahrzeugs F kommt es zu einem Pixelversatz P in aufeinander folgenden, mittels der Bildaufnahmeeinheit 1.1 erfassten Bildern.

Der durch die Nick-, Roll- und/oder Gierwinkeländerungen hervorgerufene Pixelversatz P ist dadurch gekennzeichnet, dass das Objekt O oder Teile des Objekts O in den aufeinander folgenden Bildern an unterschiedlichen Positionen im Bild dargestellt sind, obwohl sich die Lage des Objekts O zu dem Fahrzeug F nicht verändert hat.

Um eine aus dem Pixelversatz P resultierende ungenaue Ermittlung und/oder Darstellung der Fahrzeugumgebung, des Objekts O in der Fahrzeugumgebung und/oder der Zustandsdaten sowie insbesondere eine daraus resultierende unpräzise bzw. falsche Ermittlung des Abstands D des Fahrzeugs F zu dem Objekt O zu vermeiden, wird der in den aufeinander folgenden Bildern enthaltene Pixelversatz P ermittelt und kompensiert.

Figur 2 zeigt ein mögliches Ausführungsbeispiel der Vorrichtung 1 nach Figur 1 in einer detaillierten Darstellung, wobei die Vorrichtung mit dem Fahrerassistenzsystem verbunden ist.

Die Vorrichtung 1 umfasst neben der Bildaufnahmeeinheit 1.1 und der Bildverarbeitungseinheit 1.2 einen Drehratensensor 1.3, welcher als Sensor mit dreidimensionalem Erfassungsbereich - auch 3D-Sensor oder 3D-Cluster genannt - ausgebildet ist, so dass mittels des Drehratensensors 1.3 Drehraten R des Fahrzeugs F derart erfassbar sind, dass gleichzeitig der Nickwinkel, Rollwinkel und Gierwinkel des Fahrzeugs F ermittelbar sind.

Zur Erfassung der Drehraten R wird mittels des Drehratensensors 1.3 eine Rotationsgeschwindigkeit des Fahrzeugs F bzw. der Bildaufnahmeeinheit 1.1 um deren Quer-, Hoch- und/oder Längsachse ermittelt und durch Integration der Rotationsgeschwindigkeit werden der Nickwinkel, Gierwinkel und/oder Rollwinkel aus der Rotationsgeschwindigkeit abgeleitet.

Alternativ können auch drei separate Drehratensensoren zur Ermittlung Drehraten R des Fahrzeugs F vorgesehen sein.

Die Drehraten R des Fahrzeugs F werden stetig einer Steuereinheit 1.4 zugeführt, welche aus den Werten der Drehraten R zunächst einem Nickwinkel, Rollwinkel und Gierwinkel des Fahrzeugs F bestimmt. Anschließend wird mittels der Steuereinheit 1.4 anhand der Nickwinkel, Rollwinkel und/oder Gierwinkel während zumindest zwei aufeinander folgender Bilder eine Nickwinkel-, Rollwinkel- und/oder Gierwinkeländerung ermittelt.

Aus der Nickwinkel-, Rollwinkel- und/oder Gierwinkeländerung wird eine Lageänderung zumindest eines Pixels während der zwei aufeinander folgenden Bilder abgeleitet und daraus ein zu erwartender Pixelversatz P bestimmt.

Dabei wird der Pixelversatz P vorzugsweise nicht für alle Pixel, sondern lediglich für einen Teil der Pixel des Bildes bestimmt, und daraus ein Pixelversatz P für alle Pixel abgeleitet, woraus eine sehr kurze Verarbeitungszeit resultiert.

Der bestimmte Pixelversatz P wird bei der Erzeugung der Disparitäten berücksichtigt, so dass das Disparitätsbild bzw. die Disparitätskarte eine dreidimensionale Repräsentation des Objekts O in seinem Kontext darstellen, welche unabhängig von dem Nickwinkel, Rollwinkel und Gierwinkel des Fahrzeugs F sind. Somit werden die Entfernung und räumliche Lage des Objekts O im Verhältnis zu der Bildaufnahmeeinheit 1.1 unter Berücksichtung der Nickwinkel-, Rollwinkel- und Gierwinkelbewegung des Fahrzeugs F erfasst, so dass der reale, unverfälschte Abstand D zu dem Objekt O ermittelt wird.

Da das Disparitätsbild bzw. die Disparitätskarte durch die Abstände der Pixel zu der Bildaufnahmeeinheit 1.1 gebildet werden, ist es zu einer genauen Ermittlung des Pixelversatzes P erforderlich, die Drehraten R des Fahrzeugs F an der Position der Bildaufnahmeeinheit 1.1 zu erfassen. Deshalb ist der Drehratensensor 1.3 unmittelbar an oder in der Bildaufnahmeeinheit 1.1 angeordnet, so dass eine Umrechnung der Drehraten R von einer anderen Position des Fahrzeugs F auf die Position der Bildaufnahmeeinheit 1.1 nicht erforderlich ist.

Zur Erhöhung der Robustheit der Vorrichtung 1 bezüglich der Ermittlung der Drehraten R und daraus folgend des Pixelversatzes P, weist diese zusätzlich zwei senkrecht zueinander angeordnete Beschleunigungssensoren 1.5, 1.6 auf, mittels welchen eine Längsbeschleunigung L und eine Querbeschleunigung Q des Fahrzeugs F erfasst werden. Die Beschleunigungssensoren 1.5. 1.6 sind ebenfalls unmittelbar an oder in der Bildaufnahmeeinheit 1.1 angeordnet.

Die Längsbeschleunigung L und Querbeschleunigung Q des Fahrzeugs F werden wie auch die mittels des Drehratensensors 1.3 bestimmten Drehraten R während mindestens zwei aufeinander folgender Bilder ermittelt und der Steuereinheit 1.4 zugeführt.

Die Steuereinheit 1.4 bestimmt aus den Werten der Längs- und Querbeschleunigung des Fahrzeugs F und anhand eines in einer Speichereinheit 1.7 hinterlegten Fahrzeugmodells die Drehraten R des Fahrzeugs F, aus welchen wiederum die Nickwinkel-, Rollwinkel- und/oder Gierwinkeländerung des Fahrzeugs F und daraus resultierend der entstehende Pixelversatz P abgeleitet werden.

Durch einen Vergleich der mittels der Werte des Drehratensensors 1.3 und der mittels der Werte der Beschleunigungssensoren 1.5, 1.6 ermittelten Drehraten R des Fahrzeugs F wird mittels des Steuergeräts 1.4 eine Plausibilitätsprüfung durchgeführt, in Abhängigkeit dieser der Pixelversatz P ermittelt und somit die Robustheit der Vorrichtung 1 vergrößert.

Sowohl der Drehratensensor 1.3 als auch die Beschleunigungssensoren 1.5, 1.6 können einen so genannten Drift der gemessenen Drehrate oder Beschleunigung aufweisen. Unter dem Drift wird eine trotz eines konstanten Verhaltens des Fahrzeugs F durch den Drehratensensor 1.3 oder die Beschleunigungssensoren 1.5, 1.6 ausgegebenen Veränderung der Drehrate oder Beschleunigung des Fahrzeugs F verstanden.

Dieser Drift, d. h. die Abweichung der Drehrate oder Beschleunigung von einem Sollwert bei konstanter Geradeausfahrt des Fahrzeugs F, wird beispielsweise durch sich ändernde Umweltbedingungen, wie Temperaturschwankungen, hervorgerufen.

Um eine Verfälschung der Messwerte zu vermeiden, aus welchen eine unzureichend genaue oder falsche Bestimmung des Pixelversatzes P und somit des Abstands D zu dem Objekt O folgt, wird der Drift, d. h. die Abweichung von dem Sollwert mittels einer Filterung, insbesondere mittels eines nicht näher dargestellten Tiefpassfilters, bestimmt.

Die ermittelte Abweichung wird bei der Bestimmung der Nickwinkel-, Rollwinkel- und/oder Gierwinkeländerung des Fahrzeugs F berücksichtigt, so dass die Messfehler minimiert und die Genauigkeit der Ermittlung und/oder Darstellung der Fahrzeugumgebung, des Objekts O in der Fahrzeugumgebung und/oder der Zustandsdaten sowie insbesondere des daraus resultierenden Abstands D des Fahrzeugs F zu dem Objekt O erhöht wird.

### Bezugszeichenliste

- 1: Vorrichtung
- 1.1: Bildaufnahmeeinheit
- 1.2: Bildverarbeitungseinheit
- 1.3: Drehratensensor
- 1.4: Steuereinheit
- 1.5: Beschleunigungssensor
- 1.6: Beschleunigungssensor
- 1.7: Speichereinheit
- 2: Fahrerassistenzsystem

- D: Abstand
- F: Fahrzeug
- L: Längsbeschleunigung
- O: Objekt
- P: Pixelversatz
- Q: Querbeschleunigung
- R: Drehrate

## Patentansprüche

1. Verfahren zum Betrieb eines videobasierten Fahrerassistenzsystems (2) in einem Fahrzeug (F), bei dem mittels von einer Bildaufnahmeeinheit (1.1) aufgenommenen und einer Bildverarbeitungseinheit (1.2) verarbeiteten Bilddaten eine Fahrzeugumgebung und/oder mindestens ein Objekt (O) in der Fahrzeugumgebung und/oder Zustandsdaten ermittelt werden, wobei bei der Ermittlung der Fahrzeugumgebung, des Objekts (O) in der Fahrzeugumgebung und/oder der Zustandsdaten ein in den Bilddaten von aufeinander folgenden Bildern enthaltener Pixelversatz (P) ermittelt und kompensiert wird,
wobei ein aus einer Nickwinkel-, Gierwinkel- und/oder Rollwinkeländerung aus erfassten Drehraten (R) während der Aufnahme zweier aufeinander folgender Bilder resultierender Pixelversatz (P) ermittelt wird, wobei die Drehraten (R) mittels mindestens eines Drehratensensors (1.3) und/oder mittels zumindest eines Beschleunigungssensors (1.5, 1.6) aus einer erfassten Längsbeschleunigung (L) und/oder Querbeschleunigung (Q) anhand eines Fahrzeugmodells während der Aufnahme mindestens zweier aufeinander folgender Bilder bestimmt werden, **dadurch gekennzeichnet, dass** der zumindest eine Drehratensensor (1.3) und/oder der zumindest eine Beschleunigungssensor (1.5, 1.6) unmittelbar an oder in der Bildaufnahmeeinheit (1.1) angeordnet sind oder ist.

2. Verfahren nach Anspruch 1,
**dadurch gekennzeichnet, dass** aus der Nickwinkel-, Gierwinkel- und/oder Rollwinkeländerung eine Lageänderung mindestens eines Pixels in den aufeinander folgenden Bildern ermittelt wird, wobei anhand der ermittelten Lageänderung des oder der Pixel ein zu erwartender Pixelversatz (P) bestimmt wird.

3. Verfahren nach Anspruch 1 oder 2,
**dadurch gekennzeichnet, dass** eine Abweichung der mittels zumindest eines Beschleunigungssensors (1.5, 1.6) ermittelten Drehraten (R) von einem Sollwert im Fall, dass das Fahrzeug (F) sich gerade bewegt, mittels einer Filterung bestimmt wird.

4. Vorrichtung (1) zum Betrieb eines videobasierten Fahrerassistenzsystems (2) in einem Fahrzeug (F), welche eine Bildaufnahmeeinheit (1.1) zur Aufnahme von Bilddaten, eine Bildverarbeitungseinheit (1.2) zur Verarbeitung der Bilddaten und eine Steuereinheit (1.4) zur Ermittlung einer Fahrzeugumgebung und/oder mindestens eines Objekts (O) in der Fahrzeugumgebung und/oder Zustandsdaten aus den Bilddaten umfasst, wobei die Steuereinheit (1.4) derart mit zumindest einem Drehratensensor (1.3) und/oder zumindest einem Beschleunigungssensor (1.5, 1.6) gekoppelt ist, dass bei der Ermittlung der Fahrzeugumgebung, des Objekts (O) in der Fahrzeugumgebung und/oder der Zustandsdaten ein in den Bilddaten von aufeinander folgenden Bildern enthaltener Pixelversatz (P) anhand von erfassten Drehraten (R) ermittelbar und kompensierbar ist, **dadurch gekennzeichnet, dass** der zumindest eine Drehratensensor (1.3) und/oder der zumindest eine Beschleunigungssensor (1.5, 1.6) unmittelbar an oder in der Bildaufnahmeeinheit (1.1) angeordnet sind oder ist.

5. Vorrichtung (1) nach Anspruch 4,
**dadurch gekennzeichnet, dass** der Drehratensensor (1.3) ein Sensor mit dreidimensionalem Erfassungsbereich ist, mittels welchem gleichzeitig ein Nickwinkel, Gierwinkel und Rollwinkel des Fahrzeugs (F) erfassbar sind.

6. Vorrichtung (1) nach Anspruch 4 oder 5,
**dadurch gekennzeichnet, dass** zwei
Beschleunigungssensoren (1.5, 1.6) rechtwinklig zueinander unmittelbar an oder in der Bildaufnahmeeinheit (1.3) angeordnet sind, wobei mittels eines
Beschleunigungssensors (1.5) eine Längsbeschleunigung (L) und mittels des anderen Beschleunigungssensors (1.6) eine Querbeschleunigung (Q) des Fahrzeugs (F) erfassbar sind.

7. Vorrichtung (1) nach Anspruch 6,
**dadurch gekennzeichnet, dass** in einer Speichereinheit (1.7) ein Fahrzeugmodell hinterlegt ist, wobei anhand des Fahrzeugmodells aus der Längsbeschleunigung (L) und/oder Querbeschleunigung (Q) Drehraten (R) des Fahrzeugs (F) ermittelbar sind.

## Claims

1. A method for operating a video-based driver assistance system (2) in a vehicle (F), in which a vehicle environment and/or at least one object (O) in the vehicle environment and/or status data is/are determined by means of image data recorded by an imaging unit (1.1) and processed by an image processing unit (1.2), wherein
during the determination of the vehicle environment, of the object (O) in the vehicle environment and/or of the status data a pixel offset (P) present in the image data of consecutive images is determined and compensated for,
wherein a pixel offset (P) resulting from a change of pitch angle, yaw angle and/or rolling angle is determined from detected rotation rates (R) during recording of two consecutive images, wherein the rotation rates (R) are determined by means of at least one rotation rate sensor (1.3) and/or by means of at least one acceleration sensor (1.5, 1.6) from a detected longitudinal acceleration (L) and/or transverse acceleration (Q) of the vehicle on the basis of a vehicle model during the recording of at least two consecutive images, **characterized in that** the at least one rotation rate sensor (1.3) and/or the at least one acceleration sensor (1.5, 1.6) is/are arranged directly at or in the imaging unit (1.1).

2. The method according to Claim 1,
**characterised in that** a change of position of at least one pixel is determined in the consecutive images from the change of the pitch angle, yaw angle and/or rolling angle, wherein the expected pixel offset (P) is determined on the basis of the determined change of position of the pixel(s).

3. The method according to Claim 1 or 2,
**characterised in that** a deviation of the rotation rates (R) determined by means of at least one acceleration sensor (1.5, 1.6) is determined from a nominal value by means of a filtration in the event that the vehicle (F) is moving.

4. An apparatus (1) for operating a video-based driver assistance system (2) in a vehicle (F), said apparatus comprising an imaging unit (1.1) for recording image data, an image processing unit (1.2) for processing the image data and a control unit (1.4) for determining a vehicle environment and/or at least one object (O) in the vehicle environment and/or status data from the image data,
wherein the control unit (1.4) is connected with at least one rotation rate sensor (1.3) and/or at least one acceleration sensor (1.5, 1.6) in such a manner that during the determination of the vehicle environment, of the object (O) in the vehicle environment and/or of the status data, a pixel offset (P) present in the image data of consecutive images can be determined and compensated for on the basis of detected rotation rates (R), **characterised in that** the at least one rotation rate sensor (1.3) and/or the at least one acceleration sensor (1.5, 1.6) is/are arranged directly at or in the imaging unit (1.1).

5. The apparatus (1) according to Claim 4,
**characterised in that** the rotation rate sensor (1.3) is a sensor with a three-dimensional detection area, by means of which a pitch angle, yaw angle and rolling angle of the vehicle (F) can be simultaneously detected.

6. The apparatus (1) according to Claim 4 or 5, **characterized in that** two acceleration sensors (1.5, 1.6) are arranged at right angles to each other directly at or in the imaging unit (1.3), wherein, by means of one of the acceleration sensors (1.5), a longitudinal acceleration (L) can be detected and by means of the other acceleration sensor (1.6) a transverse acceleration (Q) of the vehicle (F) can be detected.

7. The apparatus (1) according to Claim 6,
**characterised in that** a vehicle model is stored in a storage unit (1.7), wherein rotation rates (R) of the vehicle (F) can be determined on the basis of the vehicle model from the longitudinal acceleration (L) and/or transverse acceleration (Q).

## Revendications

1. Procédé destiné à la mise en oeuvre d'un système d'aide à la conduite (2) par vidéo dans un véhicule (F), dans lequel, au moyen de données d'image enregistrées par une unité de prise de vues (1.1) et traitées dans une unité de traitement d'images (1.2), un environnement du véhicule et/ou au moins un objet (O) dans l'environnement du véhicule et/ou des données d'état sont déterminés, un décalage de pixels (P) contenu dans les données d'image d'images qui se succèdent étant déterminé et compensé lors de la détermination de l'environnement du véhicule, de l'objet (O) dans l'environnement du véhicule et/ou des données d'état,
un décalage de pixels (P) résultant d'une variation d'angle de tangage, d'angle de lacet et/ou d'angle de roulis à partir de vitesses de rotation (R) détectées pendant l'enregistrement de deux images qui se succèdent étant déterminé, les vitesses de rotation (R) étant définies au moyen d'au moins un capteur de vitesse de rotation (1.3) et/ou au moyen d'au moins un capteur d'accélération (1.5, 1.6) à partir d'une accélération longitudinale (L) et/ou d'une accélération transversale (Q) détectée à l'aide d'un modèle de véhicule pendant l'enregistrement d'au moins deux images qui se succèdent, **caractérisé en ce que** le capteur de vitesse de rotation (1.3) au moins au nombre de un et/ou le capteur d'accélération (1.5, 1.6) au moins au nombre de un sont ou est disposé(s) directement sur ou dans l'unité de prise de vues (1.1).

2. Procédé selon la revendication 1,
**caractérisé en ce que**, à partir de la variation d'angle de tangage, d'angle de lacet et/ou d'angle de roulis, une variation de position d'au moins un pixel dans les images qui se succèdent est déterminée, un décalage de pixels (P) à quoi il faut s'attendre étant défini à l'aide de la variation de position déterminée du ou des pixels.

3. Procédé selon la revendication 1 ou 2,
**caractérisé en ce qu'**une divergence des vitesses de rotation (R) déterminées au moyen d'au moins un capteur d'accélération (1.5, 1.6) par rapport à une valeur de consigne dans le cas où le véhicule est en train de se déplacer est définie au moyen d'un filtrage.

4. Dispositif (1) destiné à la mise en oeuvre d'un système d'aide à la conduite (2) par vidéo dans un véhicule (F), qui comprend une unité de prise de vues (1.1) pour l'enregistrement de données d'image, une unité de traitement d'images (1.2) pour le traitement des données d'image et une unité de commande (1.4) pour la détermination d'un environnement du véhicule et/ou d'au moins un objet (O) dans l'environnement du véhicule et/ou de données d'état à partir des données d'image, l'unité de commande (1.4) étant couplée à au moins un capteur de vitesse de rotation (1.3) et/ou à au moins un capteur d'accélération (1.5, 1.6) de telle sorte que, lors de la détermination de l'environnement du véhicule, de l'objet (O) dans l'environnement du véhicule et/ou des données d'état, un décalage de pixels (P) contenu dans les données d'image d'images qui se succèdent peut être déterminé et compensé à l'aide de vitesses de rotation (R) détectées, **caractérisé en ce que** le capteur de vitesse de rotation (1.3) au moins au nombre de un et/ou le capteur d'accélération (1.5, 1.6) au moins au nombre de un sont ou est disposé(s) directement sur ou dans l'unité de prise de vues (1.1).

5. Dispositif selon la revendication 4,
**caractérisé en ce que** le capteur de vitesse de rotation (1.3) est un capteur avec une plage de détection tridimensionnelle, au moyen duquel un angle de tangage, un angle de lacet et un angle de roulis du véhicule (F) peuvent être détectés simultanément.

6. Dispositif selon la revendication 4 ou 5,
**caractérisé en ce que** deux capteurs d'accélération (1.5, 1.6) sont disposés à angle droit l'un par rapport à l'autre directement sur ou dans l'unité de prise de vues (1.3), une accélération longitudinale (L) pouvant être détectée au moyen d'un capteur d'accélération (1.5), et une accélération transversale (Q) du véhicule (F) pouvant être détectée au moyen de l'autre capteur d'accélération (1.6).

7. Dispositif selon la revendication 6,
**caractérisé en ce qu'**un modèle de véhicule est stocké dans une unité de mémoire (1.7), des vitesses de rotation (R) du véhicule (F) pouvant être définies à l'aide du modèle de véhicule à partir de l'accélération longitudinale (L) et/ou de l'accélération transversale (Q).
